# EUROPÄISCHE PATENTSCHRIFT

(11) **EP 0 632 245 B1**
(45) Veröffentlichungstag und Bekanntmachung des Hinweises auf die Patenterteilung: **15.10.1997**
(21) Anmeldenummer: 94110227.9
(22) Anmeldetag: 30.06.1994
(51) Int. Cl.: F28D 1/03, F28F 3/04, B60H 1/00

(54) **Wasser/Luft-Wärmetauscher aus Aluminium für Kraftfahrzeuge**
Water-air heat exchanger of aluminium for motor vehicles
Echangeur de chaleur eau-air en aluminium pour véhicules automobiles

(30) Priorität: 01.07.1993 DE 9309822 U; 03.12.1993 DE 9318525 U
(43) Veröffentlichungstag der Anmeldung: 04.01.1995
(73) Patentinhaber: THERMAL-WERKE Wärme-, Kälte-, Klimatechnik GmbH, D-68766 Hockenheim (DE)
(72) Erfinder: Haussmann, Roland, Dipl.-Ing., D-69168 Wiesloch (DE)
(74) Vertreter: Dr. Elisabeth Jung Dr. Jürgen Schirdewahn Dipl.-Ing. Claus Gernhardt

(56) Entgegenhaltungen:
- EP-A- 0 457 470
- DE-A- 3 440 489
- DE-U- 8 816 980
- PATENT ABSTRACTS OF JAPAN vol. 16, no. 26 (M-1202) 22. Januar 1992 & JP-A-03 238 165 (ZEXEL) 23. Oktober 1991

## Beschreibung

Die Erfindung bezieht sich auf einen Wasser/Luft-Wärmetauscher aus Aluminium oder einer Aluminium-Legierung für Kraftfahrzeuge, insbesondere auf einen Heizungswärmetauscher oder Motorkühler, gemäß dem Oberbegriff von Anspruch 1. Ein solcher Wärmetauscher ist aus der JP-A-32 38 165 bekannt.

Als Aluminium-Legierungen für derartige Wärmetauscher kommen im Rahmen der Erfindung insbesondere die Legierungen AlMnl oder AlMgSi oder A199,5 in Frage, wobei die beiden erstgenannten Legierungen vorzugsweise für Rohre, Wasserkästen und Platten und die letztgenannte Legierung vorzugsweise für Zickzacklamellen Verwendung finden. Rohre und Wasserkästen werden zweckmäßig beidseitig mit Hartlot AlSi7 vorbeschichtet. Diese Lotbeschichtung wird nach der Montage mit Flußmittel, z.B. einem Natriumfluorid und Kaliumaluminiumfluorid besprüht. Die Verlötung zu dem Endprodukt, das nach der Erfindung geschützt ist, erfolgt dann in einem Lötofen unter Schutzgas ohne Zufügung weiteren Lots zu der Vorbeschichtung.

Bei einem solchen Wärmetauscher bestehen daher alle wesentlichen tragenden Elemente ebenso wie die Grundsubstanz des Lots aus Aluminium bzw. einer Aluminium-Legierung. Ein solcher integraler Aufbau aus Aluminium oder einer Aluminium-Legierung wird neuerdings angestrebt, um den Wärmetauscher kostengünstig als im wesentlichen nur aus Aluminium bestehendes kompaktes Teil recyceln zu können.

Wasser/Luft-Wärmetauscher wie Motorkühler oder insbesondere Heizungswärmetauscher, auf welche die Erfindung speziell bezogen ist, sind ferner Wärmetauscher, die im Gegensatz etwa zu Verdampfern oder Verflüssigern in einem Kühlkreislauf innerhalb eines Kraftfahrzeuges angeordnet werden. Ein solcher Kühlkreislauf verwendet als inneres Wärmetauschmedium Wasser oder Wasser mit einem Frostschutzzusatz wie etwa Glykol. Als äußeres Wärmetauschmedium dient die Umgebungsluft. Derartige Wasser/Luft-Wärmetauscher für Kraftfahrzeuge werden somit bei relativ geringem Innendruck betrieben, und zwar bei einem Betriebsdruck von etwa 1,5 bis höchstens 2 bar und einem Zulassungsdruck von insbesondere 4 bar. Verdampfer und Verflüssiger von Klimaanlagen in Kraftfahrzeugen haben demgegenüber ein nicht auf Wasserbasis aufgebautes Kühlmittel, z.B. früher die jetzt als umweltschädlich aufgefaßten Fluorchlorkohlenwasserstoffe oder jetzt Fluorkohlenwasserstoffe, und müssen auf hohe innere Betriebsdrücke ausgelegt werden, wie typischerweise Betriebsdrücke von etwa 25 bar und Berstdrücke von über 100 bar (z.B. 105 bar). Die Auslegungskriterien von erfindungsgemäßen Wärmetauschern und von Verdampfern sowie Verflüssigern bei Kraftfahrzeugen sind daher wegen der unterschiedlichen Festigkeitsanforderungen von vornherein grundlegend verschieden.

Wasser/Luft-Wärmetauscher für Kraftfahrzeuge, wie insbesondere auch Heizungswärmetauscher, sind schließlich Großserienerzeugnisse, wobei bei einem großen Kraftfahrzeughersteller bei einem einzigen Wagentyp bereits Stückzahlen von etwa einer halben Million bis weit über eine Million pro Jahr in Frage kommen können. Derartige Großserienerzeugnisse haben daher den Charakter von Massenartikeln, bei denen im Rahmen der stets von den Kraftfahrzeugherstellern verlangten Kostenoptimierung bereits kleine Kosteneinsparungen von großer Bedeutung sind, zumal im Rahmen derartiger Optimierungsarbeit zugleich möglichst keine Kompromisse bezüglich der optimalen Funktionsfähigkeit gemacht werden sollen.

Bisher hat man aus Aluminiumrohren und Wasserkästen aus Kunststoff zusammengesteckte Wärmetauscher für Kraftfahrzeuge aus Kostengründen bevorzugt, da die bekannten Wärmetauscher aus Vollaluminium, also unter Einbeziehung des Wasserkastens aus Aluminium, wegen der verschiedenen aufwendigen Arbeitsschritte beim Verlöten in der Herstellung teurer waren, wobei der Mehrpreis nur durch die Recycelbarkeit vertretbar war.

Im Rahmen der Erfindung soll bei einem Wärmetauscher, der als aus Aluminium (oder einer Aluminium-Legierung) bestehend bezeichnet ist, das Material des Deckels des Wasserkastens zunächst offen bleiben, so daß gegebenenfalls dieser Deckel weiterhin aus Kunststoff bestehen und vor dem Recyclingprozeß demontiert werden kann. Wesentlich im Zusammenhang mit der Erfindung ist vor allem hinsichtlich des Wasserkastens, daß dessen Rohrboden aus Aluminium oder einer Aluminium-Legierung besteht. Im Interesse einer Vermeidung von Demontagearbeiten vor dem Recycling ist nach der Erfindung jedoch insbesondere (Anspruch 4) auch die an sich bei auf dem Markt befindlichen Wärmetauschern bekannte Möglichkeit mit einbezogen, auch den Wasserkasten vollständig aus Aluminium zu fertigen, so daß dann dessen Rohrboden und dessen Deckel beide aus Aluminium oder einer Aluminium-Legierung bestehen und miteinander durch Hartlot verlötet sind.

Funktionell werden die Wasser/Luft-Wärmetauscher, auf die sich die Erfindung bezieht, im Kreuzgegenstrom betrieben. Für einen derartigen Betrieb im Kreuzgegenstrom benötigt man mindestens zweiflutige Wärmetauscher. Dabei kann man jedoch zwei- und mehrreihige oder insbesondere zwei- und mehrflutige Wärmetauscher bei geringeren Anforderungen auch insgesamt strömungsmäßig parallelschalten und dann nur im einfachen Kreuzstrom betreiben. Ein solcher im Rahmen der Erfindung im Grenzfall auch mit einbezogener Aufbau wäre dann genau genommen nicht mehrflutig, sondern nur mehrreihig. Wie erwähnt wird jedoch im Rahmen der Erfindung insbesondere auf echte Mehrflutigkeit Bezug genommen.

Für eine mehrflutige Anordnung von Flachrohren ist es bereits bekannt, die Flachrohre selbst durch mindestens eine in Längsrichtung verlaufende Trennwand zweiflutig auszubilden, wobei die Trennwand jeweils zwischen benachbarten gegenläufigen Fluten in einem Verbindungsbereich an den dem Wasserkasten fernen Enden der Flachrohre über eine Länge ausgespart ist, längs derer die benachbarten gegenläufigen Fluten kommunizieren.

Bei einem bekannten Wasser/Luft-Wärmetauscher aus Leichtmetall für Kraftfahrzeuge (DE-U1- 88 16 980.4) hat man dabei die Flachrohre als Strangpreßprofile gefertigt. Hierbei erfordert es eine schwierige und kostenaufwendige Nachbearbeitung, um im Kommunikationsbereich benachbarter gegenläufiger Fluten die dort bei der Herstellung gewonnene Trennwand teilweise wieder abzutragen.

Die DE-C2- 3 440 489 betrifft nur einen Kühler von Kraftfahrzeugen, für den überdies keine Herstellung aus Aluminium oder einer Aluminium-Legierung vorgesehen wird. Nach einer Ausführungsart wird die sich nur über eine beschränkte Länge des Flachrohres erstreckende Trennwand nachträglich in den Flachrohrkörper eingesetzt, sei es als einfache, durch Haltenoppen fixierte Trennwand, sei es als Trennwand in Kombination mit turbulenzerzeugenden Armen, die gleichzeitig zur Zentrierung im Flachrohre dienen. Diese Herstellungsweise ist ebenfalls umständlich und kostenaufwendig im Hinblick auf die schmalen lichten Weiten der Flachrohre. Nach einer anderen Ausführungsart wird die Trennwand durch Verformung des das Flachrohr bildenden Blechteils gebildet, indem bis zur gegenüberliegenden Wand eine Sicke eingeformt wird. Diese Sicke wird in dem Verbindungsbereich, wo die gegenläufigen Fluten kommunizieren sollen, an die Innenwandfläche des Flachrohres umgelegt. Im Umlegungsbereich erfolgt dabei zwangsläufig wegen der Doppelwandigkeit der Sicke und deren Neigung zum Zurückfedern eine drosselnde Reduzierung der Kommunikation um mehr als zwei Wandstärken des Flachrohres. Außerdem besteht die Gefahr, daß sich beim Andrücken der doppelwandigen Sicke an die Innenfläche des Flachrohres dieses nach außen ausbeult und damit die Verbindung mit der äußeren Lamellenanordnung gestört wird. Wenn auch die Herstellung der Trennwand durch Verformung eines das Flachrohr bildenden Blechteils sich an sich aus Gründen einfacher und kostengünstiger Massenfertigung anbietet, hat es doch bisher in die Praxis keinen Eingang gefunden. Dabei haben bei der letztgenannten bekannten Herstellungsweise neben dem verhältnismäßig hohen Widerstandsbeiwert im Verbindungsbereich der Kommunikation der gegenläufigen Fluten auch noch weitere Effekte nachteilig beigetragen, wie die schon angesprochene Störung der Verbindung mit den Lamellen sowie weiterhin Einfallen der Flachrohre mangels innerer Abstützung außerhalb der Trennwand im Verbindungsbereich mit dem Rohrboden sowie relativ schlechter Wärmeübergang innerhalb der Flachrohre mangels hinreichender Turbulenz des in den Flachrohren geführten Wassers.

Bei dem Wasser/Luft-Wärmetauscher gemäß der JP-A-32 38 165, von dem der Oberbegriff des Anspruchs 1 der Erfindung ausgeht, wird das ganze Flachrohr bereits aus einem einzigen Blechteil gebildet, wobei auch die Trennwand selbst durch Verformen dieses Blechteils gebildet wird. Hierzu werden beide Enden des Blechteils so umgebogen, daß sie gemeinsam eine doppelwandige Ausbildungsform der Trennwand erzeugen. Der Verbindungsbereich der gegenläufigen Fluten wird durch einen Ausschnitt im Blechteil erzeugt. In dem Grenzfall, daß im Verbindungsbereich möglichst keine Drosselung der Strömung erfolgen soll, ist dabei die Lötspaltlänge praktisch Null. Wenn aber die Schnittführung im Verbindungsbereich so gewählt ist, daß noch etwas Lötstrecke vorhanden ist, ist diese zwangsläufig im Rahmen dieser bekannten Konstruktion sehr klein. Schließlich kann es im Verbindungsbereich aufgrund der Konstruktionsweise der doppelwandigen Trennwand und ihres Anschlusses an die Innenwandflächen der Flachseiten des Flachrohres zu Verwirbelungen kommen.

Es ist an sich bekannt (EP-A1- 0 457 470, vgl. auch GB-A- 2 223 091, DE-A- 1 501 537 und mit äußerer Abstützung FR-A- 2 156 359), Flachrohre gegen Einfallen beim Verlöten und gegen Aufsprengung bei Berstdruck dadurch zu sichern, daß über die Wand der Flachrohre beidseitig Wandeindellungen verteilt sind, welche als Abstandhalter der beiden Flachseiten des jeweiligen Flachrohres bemessen sind und diese Flachseiten im festen relativen Abstand durch Verlötungen der Eindellungen halten. Diese Maßnahme ist bisher nur bei einflutigen Flachrohren vorgesehen.

Der Erfindung liegt daher die Aufgabe zugrunde, einen Wärmetauscher der gattungsgemäßen Bauart sowohl kostenmäßig als auch funktionsmäßig bei minimalem Materialeinatz weiter zu optimieren, wobei besonderer Wert auf einen möglichst geringen heizmittelseitigen Widerstand bei möglichst hoher innerer Wärmeübergangszahl gelegt wird und weder beim Lötvorgang noch im Betrieb durch die Bauweise Störungen auftreten sollen.

Diese Aufgabe wird bei einem Wärmetauscher mit den Merkmalen des Oberbegriffs von Anspruch 1 durch dessen kennzeichnende Merkmale gelöst.

Indem die Trennwand eines mindestens zweiflutigen Flachrohres, bei dem sich die Trennwand nur über einen Teil der Länge erstreckt, aus dem Wandmaterial des Flachrohres mit ausgeformt wird, wird an eine für die Praxis für eine einfache, schnelle und kostengünstige Massenfertigung wesentliche Idee der JP-A-32 38 165 direkt angeknüpft. Im Gegenstand zur JP-A-32 38 165 ist nunmehr aber die Trennwand gemäß dem ersten Kennzeichnungsmerkmal nur noch durch eine einzige Wandstärke des Blechteils gebildet, welches von der einen Flachseite des Flachrohres zur anderen Flachseite hin gebogen ist. Diese einwandige Ausbildung der Trennwand bewirkt an sich eine etwas geringere Formstabilität der Abstützung der Flachseiten des Flachrohres gegeneinander über die Trennwand. Die nach der Erfindung gemüß dem zweiten Kennzeichnungsmerkmal vorgesehenen abstützenden Eindellungen haben dabei nicht nur die übliche Funktion als Turbulatoren, sondern ergänzen die Abstützung der beiden Flachseiten gegeneinander so, daß die Einwandigkeit der Trennwand bezüglich der Formstabilität keine Rolle mehr spielt, sondern die Abstützungsfunktion sogar überkompensiert wird. Die Art der Bildung der Trennwand unter bündiger Überlappung mit den im Bereich der Trennwand weiterführenden Bereichen der Flachseiten der Flachrohre bietet ferner den Vorteil, daß auch im Bereich des Verbindungsbereichs, wo die beiden Fluten des Flachrohres aneinander anschließen, eine Verlötung über eine ausreichend lange Verlötungsstrecke erfolgen kann, die durch Wahl der Länge des Überlappungsbereichs frei wählbar ist. Schließlich bewirkt die Ausbildung der Trennwand mit bündigem Anschluß an die weiterführenden Flachseiten auch eine stetigere und schlichtere Übergangsausbildung aus der einen Flut in die andere unter deutlicher Minimierung möglicher Verwirbelungen im Verbindungsbereich, die praktisch wie zusätzliche Drosselungen wirken können. Durch Optimierung des Verbindungsbereiches zwischen den gegenläufigen Fluten auf einen geringeren Widerstandsbeiwert als bisher wird insoweit nunmehr den praktischen Betriebsbedürfnissen Rechnung getragen, ohne Montagerisiken Einbußen im Hinblick auf den Dauerbetrieb hinnehmen zu müssen. So sorgen die rasterförmig verteilten Eindellungen, die nunmehr zusätzlich zu der Trennwand vorgesehen sind, für eine Sicherheit gegen Einfallen beim Verlöten der Flachrohre im Rohrboden. Außerdem halten sie die Wände der Flachrohre gegen Berstdruck aneinander. Darüber hinaus wird optimal von der weiteren Funktion dieser Eindellungen Gebrauch gemacht, daß sie als Turbulatoren wirken. Dadurch erhält man einen optimalen inneren Wärmeübergang vom Wasser auf die äußeren Wärmeübertragungsflächen des Flachrohres. Die Eindellungen wirken dabei als solche Turbulatoren, die spezifisch für die in der Praxis vorkommenden schmalen Flachrohre konzipiert sind, während Turbulenzeinsätze, wie sie beispielsweise in der DE-C2- 3 440 489 Anwendung finden, sogar nach eigenen Aussagen dieser Vorveröffentlichung bei schmalen Flachrohren kaum noch eine turbulenzwirksame Bedeutung haben. Die hohe Druckstabilität des erfindungsgemäßen Wärmetauschers hat besondere Bedeutung auch gerade bei Heizungswärmetauschern für Kraftfahrzeuge, die im Fahrzeuginnenraum positioniert sind und die gegen inneren Berstdruck stabiler sein sollen als ein im gleichen Kreislauf eingeschalteter Motorkühler.

Es erscheint zweckmäßig, eine derartige abstandhaltende Eindellung nicht unmittelbar dort vorzusehen, wo die linienförmige Verlötungsanlage erfolgt, um dort keine Störstellen einzubauen. Wenn man die betreffende Eindellung etwas außerhalb des Rohrbodens anordnet, wirkt sie immer noch abstützend im geschilderten Sinne im Bereich der linienförmigen Verlötung. Außerdem wird dabei der an der Außenseite des Rohrbodens vorgesehene keilförmige Lötspalt weiter stabilisiert. Schließlich kann man von dort an dann die abstandhaltenden abstützenden Eindellungen noch über den ganzen übrigen Bereich des Flachrohres verteilen, um dessen Querschnitt auch bei kleiner Wandstärke des Flachrohres weiter zu stabilisieren und dort zugleich turbulenzerhöhende Wirkung auszuüben. Mann kann dadurch insbesondere auch bei sehr dünner Wandstärke (in den Bereichen wie angegeben) sehr hohe Berstdrücke erreichen, die weit oberhalb dessen liegen, was man sonst bei Wasser/Luft-Wärmetauschern als erforderlich ansieht.

Da das erfindungsgemäße Flachrohr mit bündigem äußeren Anschluß aus einem einzigen Blechteil unter gleichzeitiger Formung der Trennwand gebogen ist, ist dann zweckmäßigerweise zur Ermöglichung der Verlötung ein äußerer Flußmittelzugang für die Verlötung der Trennwand des jeweiligen Flachrohres vorgesehen, der nach der Verlötung durch das Lot geschlossen wird, wobei dieser äußere Flußmittelzugang im Bereich einer Überlappung im Bereich der beidseitigen bündigen Anschlüsse vorgesehen werden kann, ohne in bestimmten Anwendungsfällen ein eigenes Flußmittelfenster formen zu müssen.

Ein solches Fenster wird jedoch vorzugsweise zusätzlich dadurch geschaffen, daß im Überlappungsbereich längs der Überlappungsstrecke verlaufende Führungsrinnen für Flußmittel im Blechteil eingeformt werden.

Bei der Herstellung des Flachrohres durch Biegen aus einem einzigen Blechteil kann man in diesem im Verbindungsbereich der Kommunikation zwischen den beiden Fluten einen Ausschnitt vorausbilden, z.B. ausstanzen, der exakt dort dem lichten Innenquerschnitt des Flachrohres entspricht. Da in diesem Bereich das Flachrohr außen bündig, aber wegen der Überlappung doppelwandig geformt ist, erhält man hier an jeder Seite des Flachrohres eine drosselnde Einengung um je eine Wandstärke des Flachrohres. Aufgrund der Herstellungsweise muß hier nicht mit einem Rückspringen umgebogener Sicken gerechnet werden, wie dies im Falle der DE-C2-3 440 489 der Fall war. Auch kann man die Unsymmetrie des bekannten Falls aufgrund der Umbiegung nur in einer Richtung vermeiden. Man erhält daher schon eine wesentliche Verbesserung des Widerstandsbeiwertes wohl hinsichtlich des absolut zur Verfügung stehenden Querschnitts als auch bezüglich der Übergangsbedingungen. Die Obergrenze des erfindungsgemäßen Wärmetauschers in bezug auf die Reduzierung der Kommunikation im Verbindungsbereich der benachbarten gegenläufigen Fluten um höchstens nur zwei Wandstärken findet in dieser Ausführungsform ihre Berechtigung.

Bevorzugt ist eine Weiterbildung nach Anspruch 11, bei der im Verbindungsbereich der Kommunikation der gegenläufigen Fluten das Blechteil nicht nur in Fortsetzung der Trennwand, sondern zusätzlich anschließend, vorzugsweise beidseitig anschließend, längs einer Teilstrecke seiner Überlappung ausgeschnitten ist. Auf diese Weise kann man im Verbindungsbereich den Einfluß doppelter Wandstärke im Überlappungsbereich auf den Widerstandsbeiwert weniger wirksam machen, so daß praktisch nur noch eine Reduzierung der Kommunikation um eine Wandstärke des Flachrohres gegeben ist. Somit kann vorzugsweise auch der obere Grenzwert der Einengung der Kommunikation im Verbindungsbereich der gegenläufigen Fluten vorzugsweise auf etwa eine Wandstärke des Flachrohres reduziert werden. Wenn dann die Begrenzung des Ausschnitts schräg, vorzugsweise unter einem Winkel β von 30° bis 60° in bezug auf die Ebenen der Flachseiten des Flachrohres verläuft, erhält man eine weitere Reduzierung des Widerstandsbeiwerts durch gute Strömungsübergänge an der Innenwandfläche des Flachrohres.

Vor der Verlötung und zur Montage ist das Bündel aus Flachrohren und Zickzacklamellen in der Grundplatte des Wasserkastens an den einen Enden der Flachrohre gehalten. Zur Halterung der anderen Enden der Flachrohre ist vorzugsweise vorgesehen, daß die dem Wasserkasten fernen Enden der Flachrohre in Nuten einer Abschlußplatte verlötet sind. Durch diese Verlötung der Nuten wird gleichzeitig der Endabschluß der Flachrohre im Anschluß an deren Verbindungsbereich der Kommunikation der gegenläufigen Fluten bewirkt. Die Abschlußplatte kann zugleich als Flansch zur Aufnahme des Wärmetauschers in einem Haltegehäuse im Kraftfahrzeug Anwendung finden.

Zweckmäßig wird dabei das Paket aus Flachrohren und Zickzacklamellen zwischen Seitenplatten gehalten und mit diesen verlötet. Die Seitenplatten greifen dann ihrerseits formschlüssig in Halteausnehmungen des Rohrbodens des Wasserkastens und der Abschlußplatte verlötet ein.

Montagemäßig wird zweckmäßig folgendermaßen vorgegangen:

Zunächst wird das Paket aus Flachrohren und Zickzacklamellen seitlich zwischen den beiden Seitenplatten eingefaßt. Dann werden die Seitenplatten aufeinander zu bewegt, bis die Anordnung der Flachrohre der Teilung im Rohrboden entspricht. Dann können auf der einen Seite der Wasserkasten und auf der anderen Seite die Abschlußplatte aufgedrückt und eingeklinkt werden, wobei die Seitenplatten als axiale Abstandhalter zwischen dem Wasserkasten und der Abschlußplatte dienen. Nach einem solchen Einklinkvorgang kann man das noch nicht verlötete Paket ohne Benötigung sonstiger Haltehilfsmittel in korrekter gegenseitiger Lage in den Lötofen überführen und dort verlöten.

Bei der rasterförmigen Verteilung beidseitiger Wandeindellungen über die Wand der Flachrohre kann man sich die Eindellungen gegeneinander abstützen lassen. Bei relativ kleinen Eindellungen ergibt sich dabei zweckmäßig eine stirnseitige Abstützung, bei größeren Eindellungen auch eine an benachbarten Flanken. Dementsprechend ergibt sich alternativ auch, daß entweder einseitige Wandeindellungen mit der gegenüberliegenden Wand oder wiederum Wandeindellungen desselben Flachrohres miteinander verlötet sind.

Vorzugsweise sind die Wandeindellungen in einem Punktraster vorgesehen, schon um die Lötanschlußstellen an die Zickzacklamellen möglichst wenig außen einzudellen und somit eine möglichst große Anlagefläche der Außenseite der Flachrohres an die Zickzacklamellen zu schaffen. Dieser Effekt kann noch verbessert werden, wenn das Raster, sei es nur ein Punktraster oder ein anderes, unter einem von 90° abweichenden Winkel, vorzugsweise von 3° bis 20° gegenüber der Achse des jeweiligen Flachrohres orientiert ist. Dadurch kann man erreichen, daß die ebenen einzelnen Lamellen nicht mit der Fortsetzungsrichtung des Rasters übereinstimmen.

Bei den beschriebenen Ausführungsformen, bei denen das Flachrohr durch Faltung aus einem Blechteil geformt ist, ist es sinnvoll, das Blechteil beidseitig mit Lot vorzubeschichten. Diese beidseitige Vorbeschichtung dient auch zum Beispiel innen zur Verlötung der Eindellungen miteinander und außen zur Verlötung mit den Zickzacklamellen sowie im Schlitz des Rohrbodens. Als Lot kommt wiederum ein Aluminiumhartlot wie auch sonst allgemein in Frage.

Die Erfindung wird im folgenden anhand schematischer Zeichnungen an mehreren Ausführungsbeispielen der bevorzugten zweiflutigen Ausführungsformen noch näher erläutert. Es zeigen.
Fig. 1 eine Explosionsdarstellung eines erfindungsgemäßen zweiflutigen Wärmetauschers;
Fig. 2 eine Draufsicht auf eine Flachseite eines zweiflutigen Flachrohres;
Fig. 3 als vergrößerten Detailquerschnitt parallel zur Linie E-E in Fig. 2 einer Ausführungsform des Bereichs der Zwischenwand des Flachrohres im Verbindungsbereich der Fluten;
Fig. 4 einen Querschnitt längs der Linie E-E von Fig. 2 durch ein zweiflutiges Flachrohr mit einer zu Fig. 3 alternativen Ausführungsform des Bereichs der Zwischenwand des Flachrohres;
Fig. 4a eine vergrößerte Detailzeichnung der Einzelheit Y von Fig. 4; und
Fig. 5 einen teilweisen Längsschnitt durch einen Wärmetauscher gemäß der Erfindung längs der Erstreckungsrichtung der Flachrohre.

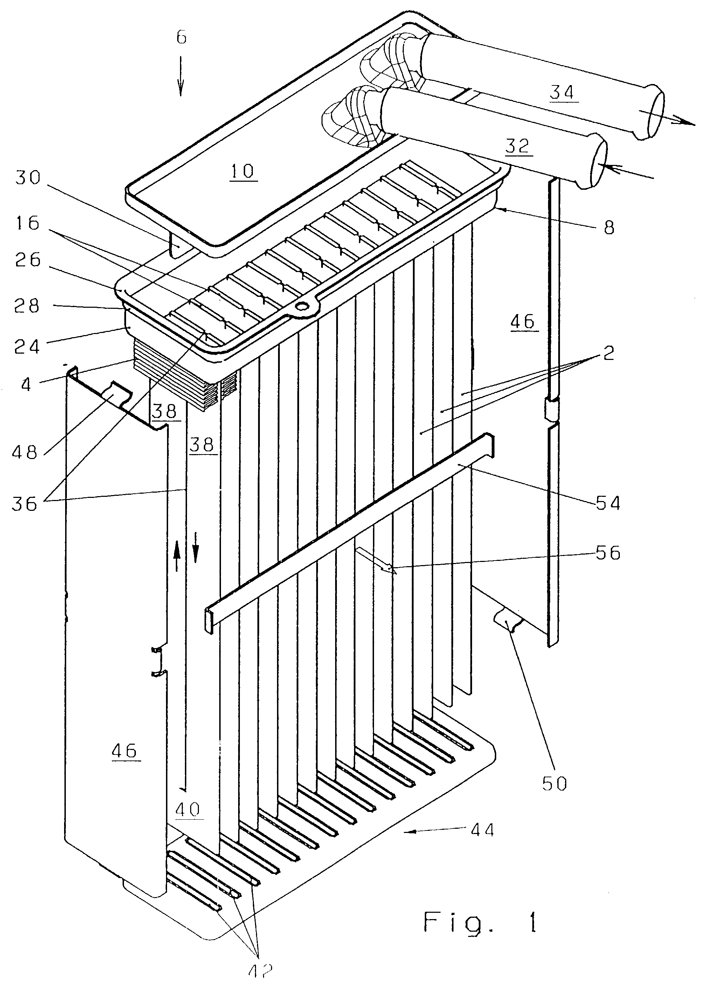

Der zweiflutige Wärmetauscher nach Fig. 1 weist eine Reihe paralleler ihrerseits zweiflutiger Flachrohre 2 auf, deren parallele Flachseiten sich gegenüberliegen und zwischen sich Zickzacklamellen 4 einschachteln, die außerdem auch noch an den äußeren Flachseiten der außenliegenden Flachrohre angeordnet sind. Die Zickzacklamellen 4 und die Flachrohre 2 sind miteinander zu einem Block im fertigen Wärmetauscher durch nicht dargestelltes Aluminiumhartlot verlötet. Die Wandstärke der Flachrohre 2 beträgt in der Praxis insbesondere 0,2 bis 0,6 mm, vorzugsweise 0,3 bis 0,4 mm.

An die in gleicher Höhe angeordneten einen Enden der Flachrohre 2 ist ein Wasserkasten 6 kommunizierend mit den Flachrohren 2 angeschlossen. Der Wasserkasten 6 besteht dabei aus einem Rohrboden 8 und einem Deckel 10, die ihrerseits durch Aluminiumhartlot miteinander verlötet sind. Nicht nur der Wasserkasten, sondern auch die Flachrohre 2, die Zickzacklamellen 4 und die anderen noch nachfolgend beschriebenen Bauteile bestehen dabei aus Aluminium oder einer Aluminiumlegierung, so daß der ganze Wärmetauscher integral im wesentlichen aus Aluminium besteht.

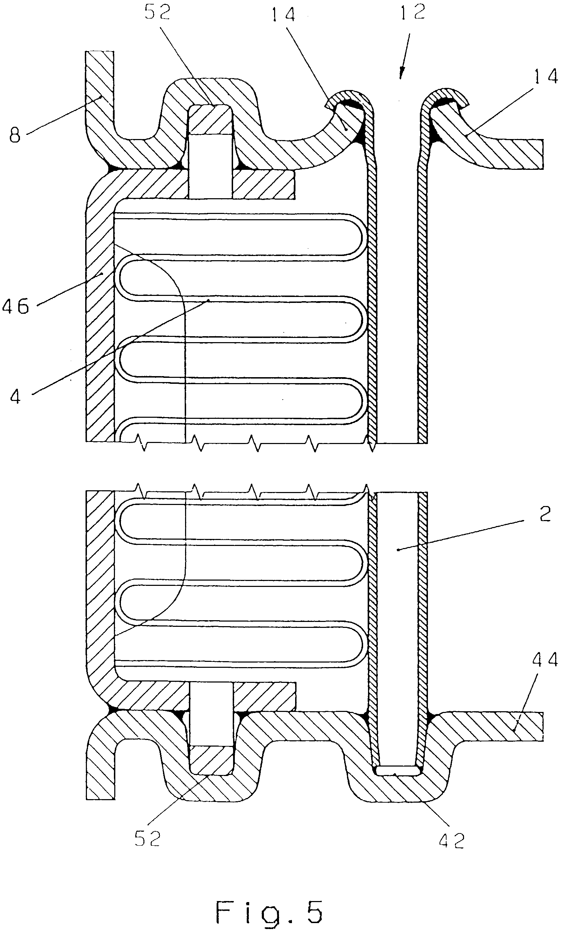

Bei dem Ausführungsbeispiel ist nur ein Wasserkasten 6 vorgesehen. Dessen Rohrboden 8 weist, wie in Fig. 1 dargestellt, parallele Schlitze (12 in Fig. 5) auf, in welche die einen Enden der Flachrohre 2 eingesteckt sind. Der Rohrboden besteht dabei aus einem Aluminiumblech mit einer Stärke von beispielsweise 1,2 mm. Dieses Blech wird an den Orten der Schlitze geschnitten. Die Ränder der Schnitte werden dann zu Kragen (14 in Fig. 5) aufgebogen. Die Enden der zweiflutigen Flachrohre 2 sind in ihren jeweiligen Schlitz 12 so weit eingesteckt, daß freie Enden 16 der Flachrohre über die Kragen hinausragen.

Die freien Enden 16 sind aufgetulpt. Die Auftulpungen sind an den beiden Längsseiten des jeweiligen Schlitzes um den jeweiligen Kragen so weit herumgelegt, daß eine Umgreifung des jeweiligen Kragens um mehr als 90° so weit erfolgt, daß eine Hinterschneidungswirkung erzielt und zwischen der zurückgebogenen Auftulpung und dem Kragen ein definierter ausgedehnter Lötspalt gebildet wird.

Der Rohrboden 8 ist mit einer umlaufenden Seitenwand 24 kastenförmig geformt und besitzt einen umlaufenden Außenflansch 26, der einen umlaufenden Außenkragen 28 aufweist. Zwischen dem Außenflansch 26 und dem Außenkragen 28 wird der flache Deckel 10 des Wasserkastens 6 eingelegt und in nicht dargestelllter Weise mit dem Aluminiumhartlot verlötet. Der Deckel 10 trägt eine Trennwand 30, welche den Wasserkasten 6 in zwei Abteilungen unterteilt. Die eine Abteilung kommuniziert mit dem Einlaß 32 und die andere mit dem Auslaß 34 des Wassers als inneres Wärmetauscherfluid.

Die Flachrohre 2 sind mittig ihrerseits mit einer Trennwand 36 versehen, welche jeweils in derselben Ebene wie die Trennwand 30 im Wasserkasten angeordnet ist. Die Trennwände 36 unterteilen das jeweilige Flachrohr 2 in zwei parallele Kanäle 38, in denen das innere Wärmetauscherfluid im Gegenstrom entsprechend der durch Pfeile auch an den Anschlüssen 32 und 34 ersichtlichen Strömungsrichtung strömt. Durch diese Verschaltung im Gegenstrom handelt es sich um zweiflutige Flachrohre 2. Die Umleitung der Strömung an den dem Wasserkasten 6 abgewandten Enden der Flachrohre 2 erfolgt dadurch, daß dort die beiden Kanäle und damit die benachbarten Fluten möglichst wenig gedrosselt kommunizieren. Mit anderen Worten ist in diesem Verbindungsbereich 40 die Trennwand 36 über eine solche Länge fortgelassen, daß der Quershcnitt des einen Kanals 38 ganz oder nahezu ungedrosselt in den des anderen Kanals 38 überführt wird. Die Länge, über welche die Trennwand 36 im Verbindungsbereich 40 der Kommunikation weggelassen ist, beträgt das Halbe bis zum Dreifachen des Abstandes zwischen Außenwand und Trennwand 36 des jeweiligen Flachrohres 2. Dieser Abstand beträgt bei praktischen Ausführungsformen insbesondere 0,5 bis 2 mm.

Die dem Wasserkasten 6 abgewandten anderen Enden der Flachrohre 2 greifen offen in Nuten 42 einer zum Rohrboden 8 parallelen Abschlußplatte 44 ein, wo sie ebenfalls durch Aluminiumhartlot eingelötet sind. Die Abschlußplatte 44 bildet daher den strömungsmäßigen Verschluß dieser Enden der Flachrohre 2. Zugleich hält die Abschlußplatte 44 die Flachrohre 2 in gleicher Weise, wie dies die Schlitze 12 am Rohrboden 8 vornehmen, in der vorgeschriebenen, im allgemeinen äquidistanten, Teilung. Die Abschlußplatte 44 kann außerdem auch zur Montage des ganzen Wärmetauschers an einem tragenden Teil des Kraftfahrzeuges dienen.

Seitlich an die äußeren Zickzacklamellen 4 schließt jeweils eine Seitenplatte 46 an, welche ihrerseits parallel zu den Flachrohren 2 verläuft. Jede dieser beiden Seitenplatten 46 weist klinkenartig in den Wasserkasten 6 und in die Abschlußplatte 44 eingreifende Fortsätze 48 und 50 auf. Die Fortsätze 48 und 50 können gemäß der Darstellung in Fig. 1 laschenartige Fortsätze sein oder alternativ gemäß der Darstellung in Fig. 5 Aussteller aus Seitenflanschen der Seitenplatten 46, wobei diese Seitenflansche parallel zum Rohrboden 8 bzw. der Abschlußplatte 44 orientiert sind und die Aussteller jeweils in entsprechende Ausnehmungen 52 (vgl. Fig. 5) im Rohrboden 8 bzw. der Abschlußplatte 44 eingreifen. Wie man insbesondere in Fig. 5 erkennen kann, sind die Halteausnehmungen 52, in welchen die Fortsätze 48 und 50 bei beiden Ausführungsformen klinkenartig eingreifen, durch entsprechende Profilierung des jeweils den Rohrboden bzw. die Abschlußplatte bildenden Blechs gewinnbar, ohne daß man eigene Ausnehmungen ausfräsen muß.

Die Seitenplatten 46 sind in ihrem mittleren Bereich durch mindestens eine Querstrebe 54 zu beiden Seiten der schmalen Stirnseiten der Flachrohre 2 so verklammert, daß die Querstreben 54 und die Seitenplatten 46 einen mechanischen Ringschluß um die Flachrohre 2 und die Zickzacklamellen 4 erzeugen. Die Verbindung erfolgt wiederum durch Aluminiumhartlot. Die Querstreben 54 dienen sowohl zur Fixierung vor der Verlötung als auch später als Zusatzarmierung gegen Berstdruck.

Das von dem Rohrboden 8, der Abschlußplatte 44, den Seitenplatten 46 und den Querstreben 54 gebildete Gehäuse für die Flachrohre 2 sowie die Zickzacklamellen 4 fixiert das ganze Aggregat auch mechanisch vor der Verlötung und bildet anschließend zugleich das Gehäuse des Wärmetauschers. Das ganze Gehäuse besteht zweckmäßig aus Aluminium oder einer Aluminium-Legierung. Alle Verbindungsstellen, insbesondere die zwischen den Flachrohren 2 und den Zickzacklamellen 4, die Enden der Flachrohre 2 in den Schlitzen des Rohrbodens 8, gegebenenfalls dessen Verbindung mit dem Deckel 10 des Wasserkastens 6 und die Verbindungen des sonstigen Gehäuses werden zweckmäßig in einem einzigen Lötvorgang hergestellt, bei dem vorbeschichtetes Lot, insbesondere Hartlot, erhitzt wird.

Durch einen Pfeil 56 ist in Fig. 1 die Strömungsrichtung der Luft dargestellt, zu der das Wasser in den beiden Kanälen 38 innerhalb der Flachrohre 2 zweiflutig und damit im Kreuzgegenstrom geführt ist.

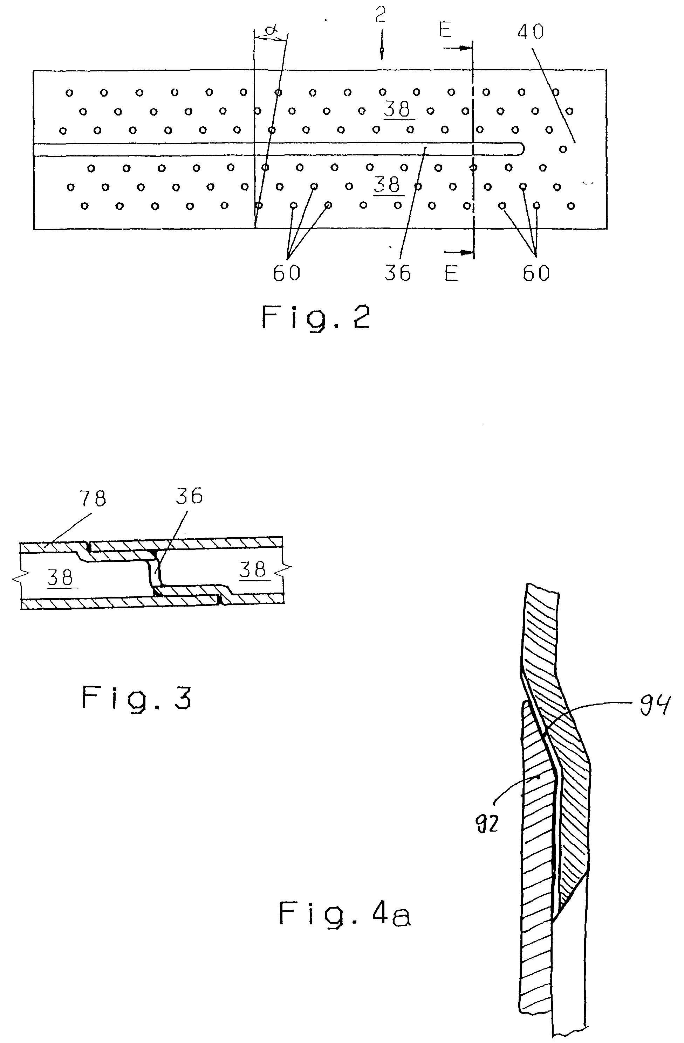

Über beide Flachseiten der Flachrohre 2 ist im Bereich beider Kanäle 38 nach einem zur Achse des jeweiligen Flachrohres 2 gemäß dem Winkel a (vgl. Fig. 2) schrägstehenden Raster ein Muster von punktförmig verteilten Wandeindellungen 60 verteilt, die als Abstandhalter der einander gegenüberliegenden Flachseiten der Flachrohre 2 dienen. Diese Anordnung der Eindellungen 60 ist zusätzlich zum Aufbau der Trennwand 36 vorgesehen, und zwar unabhängig von deren Gestaltung im einzelnen, wie sie z.B. nachfolgend noch in mehreren Alternativen beschrieben ist. Wie Fig. 2 zeigt, können sich dabei Eindellungen 60, welche von beiden Flachseiten eines Flachrohres 2 ausgehen, stirnseitig gegeneinander abstützen. Varianten gegenseitiger Verschachtelung und Abstützung von Eindellungen einer Flachseite an einer flachen gegenüberliegenden Seite des Flachrohres sind dabei möglich. Dabei kann man unter Umständen alle Eindellungen an einer Seite des Flachrohres vorsehen oder aber auch nach einem vorgegebenen Muster die Eindellungen in gegenseitigem Versatz an beiden Flachrohren vorsehen.

In jedem Fall sind die beiden Flachseiten eines Flachrohres 2 über die jeweiligen Eindellungen nicht nur unter Abstandhaltung gegeneinander abgestützt, sondern sogar gegeneinander mit Aluminiumhartlot verlötet, wodurch der Berstdruck des Rohres wesentlich gesteigert werden kann.

Die Eindellungen 60 haben neben der Abstützfunktion auch eine Funktion als turbulenzerzeugendes Mittel für das Wasser im Flachrohr 2 und sind dort nicht mehr erforderlich, wo die Strömung nicht mehr erfolgt, d.h. im Eingriffsbereich in die Abschlußplatte 44.

Ebenso ist es denkbar, von einer Anordnung der Eindellungen im Bereich des Eingriffs der Flachrohre 2 in den Rohrboden 8 abzusehen. Aus Stabilitätsgründen ist eine Anordnung der Eindellungen aber auch dort empfehlenswert.

In Fig. 3 wird der geschlossene Umfang des Flachrohres durch eine Überlappung im Bereich der Mitteltrennwand 36 gebildet. Durch diese Überlappung des Blechteiles erfolgt gleichzeitig der äußere Flußmittelzugang. Im Verbindungsbereich 40 (vgl. Fig. 1) der beiden Strömungskanäle 38 ist die Trennwand 36 ausgespart, so daß beide Strömungskanäle 38 kommunizieren können.

Bei der Ausführungsform nach Fig. 3 ist die Kommunikationsverbindung zwischen den beiden Fluten bei dem gezeigten maximalen Öffnungsquerschnitt noch um zwei Wandstärken des Flachrohres schmaler als in anschließenden Kanälen 38. Außerdem ergeben die scharfkantigen Wandenden neben der Kommunikationsöffnung einen relativ hohen Widerstandsbeiwert.

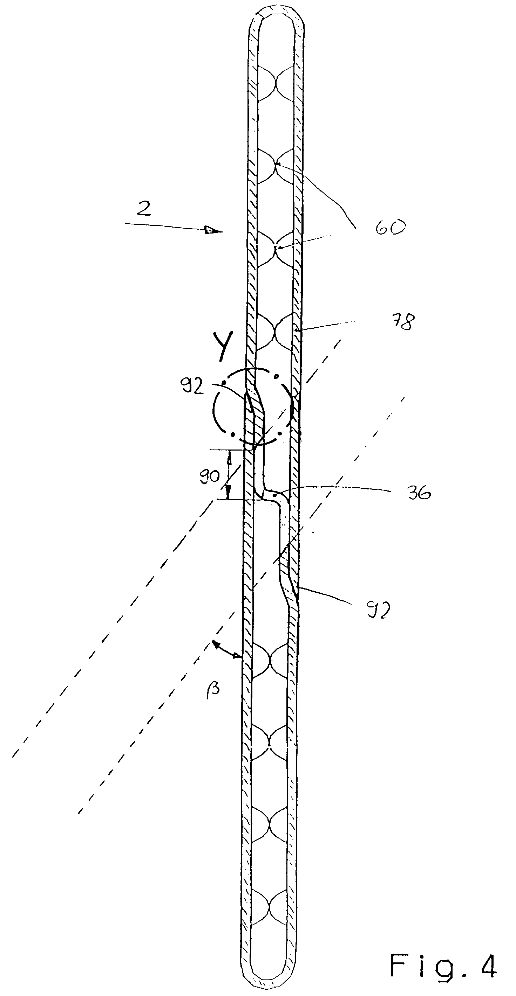

Bei der gegenüber Fig. 3 weiterentwickelten Variante gemäß Fig. 4 wird die Einengung des Strömungsquerschnitts an der Kommunikationsverbindung zwischen den Kanälen 38 auf eine Wandstärke reduziert. Außerdem ist deren Begrenzung mit einem wesentlich geringeren Widerstandsbeiwert gestaltet.

Hierzu ist das Blechteil, aus dem das Flachrohr 2 gebogen ist, nicht nur im Bereich der Trennwand 36 ausgeschnitten, sondern zusätzlich beidseitig anschließend auch dort noch längs einer Teilstrecke 90 ausgeschnitten, die sich längs der Überlappung des Blechteils erstreckt. Die beiden Überlappungsstellen des nicht ausgeschnittenen Bereichs des Blechteils sind somit in Querrichtung des Flachrohres gegeneinander versetzt und bilden jede für sich eine Drosselöffnung mit Einschnürung jeweils nur um eine Wandstärke.

Der Widerstandsbeiwert im Bereich 40 der Kommunikationsöffnung wird zusätzlich dadurch erniedrigt, daß die Begrenzung des Ausschnitts nicht mehr wie in Fig. 3 stumpf, sondern unter einem spitzen Winkel β von vorzugsweise 30° bis 60° in bezug auf die Ebenen der Flachseiten des Flachrohres 2 verläuft. Der spitze Winkel β wird an dem Blechteil in einer Vorfertigungsstufe durch schräges Ausstanzen des Ausschnittes entsprechend den gestrichelten Linien in Fig. 4 gewonnen.

Indem ferner am Ende der Überlappung der äußere Blechrand 92 jeweils von innen nach außen schräg zulaufend angespitzt (mit abgestumpfter Spitze) wird, erhält man auch in der parallel dazu geführten Innenwand einen strömungsgünstigeren Übergang als in Fig. 3. Die Abschrägung des Blechrands 92 verringert zusätzlich die Spaltbreite zu Beginn der Überlappung bei Toleranzen in Querrichtung des Flachrohres.

Die Teilstrecke 90 sollte mindestens eine Wandstärke ausmachen. Praxisgerecht ist z.B. eine Bemessung von drei bis fünf Wandstärken.

Wie sich ferner aus der Einzelheit Y in Fig. 4a ergibt, sieht man zweckmäßig im Überlappungsbereich des Blechteils in diesem geformte und sich längs der Überlappung erstreckende Führungsrillen 94 für Flußmittel vor, die sozusagen als äußeres Fenster für Flußmittelzufuhr von außen zu den mit Lot vorbeschichteten, im Überlappungsbereich bündig zu verlötenden Flächen des das Flachrohr bildenden Blechteils dienen.

## Patentansprüche

1. Wasser/Luft-Wärmetauscher aus Aluminium oder einer Aluminium-Legierung für Kraftfahrzeuge, insbesondere Heizungswärmetauscher oder Motorkühler, mit einer mindestens zweiflutigen Reihenanordnung von parallelen Flachrohren (2), die über Zickzacklamellen (4) miteinander verlötet sind, und mit mindestens einem an den einen Enden der Flachrohre (2) kommunizierend angeschlossenen Wasserkasten (6), bei dem eine Trennwand (30) eine mit einem Einlaß (32) versehene Einlaßkammer von einer mit einem Auslaß (34) versehenen Auslaßkammer abteilt und dessen Rohrboden (8) Schlitze (12) aufweist, in die die Enden der Flachrohre gegen den Rohrboden (8) verlötet eingesteckt sind, wobei
die Flachrohre (2) selbst durch mindestens eine in Längsrichtung verlaufende Trennwand (36) mindestens zweiflutig ausgebildet sind, die Trennwand (36) jeweils zwischen benachbarten gegenläufigen Fluten in einem Verbindungsbereich (40) an den den Wasserkasten (6) fernen Enden der Flachrohre (2) über eine Länge ausgespart ist, längs derer die benachbarten gegenläufigen Fluten kommunizieren,
die Trennwand (36) durch Verformung eines das Flachrohr (2) bildenden und zur Bildung des Verbindungsbereiches (40) ausgeschnittenen einzigen Blechteils gebildet ist, und
im Verbindungsbereich (40) der Kommunikation der benachbarten gegenläufigen Fluten die Kommunikation ungedrosselt oder höchstens nur um zwei Wandstärken des Flachrohres (2) reduziert erfolgt,
dadurch **gekennzeichnet**,
daß die Trennwand (36) aus nur einer Materialstärke des Blechteils geformt ist, das im Bereich der Trennwand (36) von einer Flachseite des Flachrohres (2) zu dessen anderer Flachseite hinübergebogen ist und an den Anschlußstellen in die jeweils weiterführende Flachseite des Flachrohres (2) je mit einem Ende des Blechteils eine außen bündige Überlappung längs der Quererstreckung der jeweiligen Flachseite bildet, und
daß längs der gegenläufigen Fluten rasterförmig über die Wand der Flachrohre (2) ein- oder beidseitig Wandeindellungen (60) verteilt sind, welche zusätzlich zur jeweiligen Trennwand (36) als Abstandhalter der beiden Flachseiten des jeweiligen Flachrohres (2) bemessen sind.

2. Wärmetauscher nach Anspruch 1, dadurch gekennzeichnet, daß die dem Wasserkasten (6) fernen Enden der Flachrohre (2) in Nuten (42) einer Abschlußplatte (44) verlötet sind.

3. Wärmetauscher nach Anspruch 1 oder 2,
dadurch gekennzeichnet, daß das Paket aus Flachrohren (2) und Zickzacklamellen (4) zwischen Seitenplatten (46) gehalten und mit diesen verlötet ist und daß die Seitenplatten (46) ihrerseits formschlüssig in Halteausnehmungen sowohl des Rohrbodens (8) des Wasserkastens (6) als auch der Abschlußplatte (44) verlötet eingreifen.

4. Wärmetauscher nach einem der Ansprüche 1 bis 3, dadurch gekennzeichnet, daß auch der Deckel (10) des jeweiligen Wasserkastens (6) aus Aluminium oder einer Aluminiumlegierung besteht und mit dem Rohrboden (8) verlötet ist.

5. Wärmetauscher nach einem der Ansprüche 1 bis 4, dadurch gekennzeichnet, daß bei beidseitiger Anordnung der Eindellungen (60) diese sich gegeneinander abstützen, vorzugsweise stirnseitig oder an benachbarten Flanken.

6. Wärmetauscher nach einem der Ansprüche 1 bis 5, dadurch gekennzeichnet, daß die Wandeindellungen (60) mit der gegenüberliegenden Wand oder wiederum Wandeindellung desselben Flachrohres verlötet sind.

7. Wärmetauscher nach einem der Ansprüche 1 bis 6, dadurch gekennzeichnet, daß die Wandeindellungen nach einem Punktraster verteilt sind.

8. Wärmetauscher nach Anspruch 7, dadurch gekennzeichnet, daß das Raster unter einem von 90° abweichenden Winkel, vorzugsweise von 3° bis 20°, gegenüber der Achse des jeweiligen Flachrohres (2) orientiert ist.

9. Wasser/Luft-Wärmetauscher nach einem der Ansprüche 1 bis 8, dadurch gekennzeichnet,
daß ein äußerer Flußmittelzugang für die Verlötung der Trennwand (36) des jeweiligen Flachrohres (2) vorgesehen ist, der nach der Verlötung durch das Lot geschlossen ist, und
daß der äußere Flußmittelzugang im Bereich einer Überlappung des Blechteils im Bereich der beidseitigen bündigen Anschlüsse vorgesehen ist.

10. Wärmetauscher nach einem der Ansprüche 1 bis 9, dadurch gekennzeichnet, daß das Blechteil, aus dem das Flachrohr (2) geformt ist, beidseitig mit Lot vorbeschichtet ist.

11. Wärmetauscher nach einem der Ansprüche 1 bis 9, dadurch gekennzeichnet, daß im Verbindungsbereich (40) der Kommunikation der gegenläufigen Fluten das Blechteil nicht nur in Fortsetzung der Trennwand (36), sondern zusätzlich anschließend, vorzugsweise beidseitig anschließend, längs einer Teilstrecke seiner Überlappung ausgeschnitten ist.

12. Wärmetauscher nach Anspruch 11, dadurch gekennzeichnet, daß die Begrenzung des Ausschnitts schräg, vorzugsweise unter einem Winkel β von 30° bis 60°, in bezug auf die Ebenen der Flachseiten des Flachrohres (2) verläuft.

13. Wärmetauscher nach Anspruch 11 oder 12, dadurch gekennzeichnet, daß im Überlappungsbereich längs der Überlappungsstrecke im Blechteil Führungsrillen (94) für Flußmittel eingeformt sind.

## Claims

1. Water-air heat exchanger made of aluminium or other aluminium alloy for motor vehicles, especially a heater heat exchanger or an engine radiator, with a bank of at least double flow parallel flat tubes (2) which are soldered to each other by way of zig zag fins (4), with at least one water box (6) communicatingly connected to the one ends of the flat tubes (2) and divided by a partition (30) into an inlet chamber provided with an inlet (32) and an outlet chamber provided with an outlet (34) and whose tube bottom (8) has slots (12) into which the ends of the flat tubes are inserted and soldered with respect to the tube bottom (8), wherein
the flat tubes (2) themselves are formed to be of at least double flow by at least one lengthwise partition (36), the partition (36) being left open along a length between adjoining contra flow passages in a connecting region (40) at the ends of the flat tubes (2) remote from the water box (6), the adjoining contra flow passages communicating along that length,
the partition (36) being formed by deformation of a single sheet metal part that forms the flat tube (2) and is cut out to form the connecting region (40), and
in the connecting region (40) of communication of adjoining contra flow passages, communication is unthrottled or is reduced by at most two wall thicknesses of the flat tube (2),
characterised in that
the partition (36) is formed by only one material thickness of the sheet metal part, which in the region of the partition (36) is bent from one flat side of the flat tube (2) towards its other flat side, and at the connecting locations of the respective continuing flat side of the flat tube (2) forms an externally flush overlap with the respective end of the sheet metal part along the transverse stretch of the respective flat side, and
wall indentations (60) are distributed in a pattern along the contra flow passages, in one or both sides, in the wall of the flat tubes (2), which, additionally to the respective partition (36), are dimensioned as spacers for the two flat sides of the respective flat tube (2).

2. Heat exchanger according to claim 1, characterised in that the ends of the flat tubes (2) remote from the water box (6), are soldered into grooves (42) of a closure plate (44).

3. Heat exchanger according to claim 1 or 2,
characterised in that the stack of flat tubes (2) and zig zag fins (4) is held between side plates (46) and soldered to them, and that the side plates (46) themselves are in soldered engagement with positive fit in retaining recesses, both of the tube bottom (8) of the water box (6) and also of the closure plate (44).

4. Heat exchanger according to one of claims 1 to 3, characterised in that also the lid (10) of the respective water box (6) consists of aluminium or other aluminium alloy and is soldered to the tube bottom (8).

5. Heat exchanger according to one of claims 1 to 4, characterised in that with two sided arrangement of the indentations (60), these bear against each other, preferably end to end or by way of their adjoining flanks.

6. Heat exchanger according to one of claims 1 to 5, characterised in that the wall indentations (60) are soldered to the opposite wall or on the other hand to wall indentations of the same flat tube.

7. Heat exchanger according to one of claims 1 to 6, characterised in that the wall indentations are distributed in accordance with a point pattern.

8. Heat exchanger according to claim 7, characterised in that the pattern is orientated at an angle that diverges from 90° with respect to the axis of the respective flat tube (2), preferably by between 3° and 20°.

9. Water-air heat exchanger according to one of claims 1 to 8, characterised in that
an exterior access for flux for soldering the partition (36) of the respective flat tube (2) is provided which after soldering is closed off by the solder, and
the exterior access for flux is provided in a region of overlap of the sheet metal part in the region of the flush connection of the two sides.

10. Heat exchanger according to one of claims 1 to 9, characterised in that the sheet metal part of which the flat tube (2) is formed, is pre-coated with solder on both sides.

11. Heat exchanger according to one of claims 1 to 9, characterised in that the sheet metal part, in the connecting region (40) of communication of the contra flow passages, is cut out not only in continuation of the partition (36), but additionally adjoining, preferably adjoining on both sides, along a part of the length of its overlap.

12. Heat exchanger according to claim 11, characterised in that the boundary of the cut out is bevelled with respect to the planes of the flat sides of the flat tube (2), preferably at an angle β of 30° to 60°.

13. Heat exchanger according to claim 11 or 12, characterised in that guide grooves (94) for flux are formed in the overlap region along the length of the overlap.

## Revendications

1. Echangeur de chaleur eau/air en aluminium ou en un alliage d'aluminium pour véhicules automobiles, notamment échangeur de chaleur de chauffage ou radiateur de moteur, comprenant un arrangement en rangée à au moins deux flux de tubes plats parallèles (2) qui sont assemblés les uns aux autres par soudage par l'intermédiaire de lamelles en zigzag (4) et au moins une boîte à eau (6) raccordée de façon communicante aux premières extrémités des tubes plats (2) et dans laquelle une cloison (30) sépare une chambre d'entrée munie d'une entrée (32) d'une chambre de sortie munie d'une sortie (34) et dont le fond tubulaire (8) présente des fentes (12) dans lesquelles les extrémités des tubes plats sont emmanchées et où elles sont soudées contre le fond tubulaire (8), cependant que
les tubes plats (2) eux-mêmes sont aménagés à au moins deux flux par au moins une cloison (36) qui s'étend dans la direction longitudinale, la cloison (36) étant évidée entre les flux à contre-courant adjacents dans une région de raccordement (40) aux extrémités des tubes plats (2) éloignées de la boîte à eau (6), sur une longueur le long de laquelle les flux à contre-courant adjacents communiquent,
la cloison (36) est formée par déformation d'une seule pièce de tôle qui forme le tube plat (2) et qui est découpée pour former la région de raccordement (40), et
la communication se produit sans étranglement ou avec une réduction égale au maximum à deux épaisseurs de paroi du tube plat (2) dans la région de raccordement (40) qui établit la communication entre les flux à contre-courant adjacents,
caractérisé,
en ce que la cloison (36) n'est formée que d'une épaisseur de matière de la pièce de tôle, laquelle pièce est pliée dans la région de la cloison (36), pour passer d'un côté plat du tube plat (2) à l'autre côté plat de ce tube et, à chaque zone de jonction avec le côté plat du tube plat (2) qui la prolonge, cette cloison forme avec une extrémité de la pièce de tôle un joint à recouvrement qui est lisse extérieurement le long de la dimension transversale du côté plat en question, et
en ce que, le long des flux à contre-courant, des dépressions (60) de la paroi sont réparties sur la paroi des tubes plats (2) à la façon d'une trame, d'un côté ou des deux côtés, lesquelles dépressions sont de dimensions propres à former des entretoises d'écartement pour les deux côtés plats du tube plat (2) en question, en supplément de la cloison (36) correspondante.

2. Echangeur de chaleur selon la revendication 1, caractérisé en ce que les extrémités des tubes plats (2) qui sont éloignées de la caisse à eau (6) sont soudées dans des rainures (42) d'une plaque de fermeture (44).

3. Echangeur de chaleur selon la revendication 1 ou 2, caractérisé en ce que le paquet composé de tubes plats (2) et de lamelles en zigzag (4) est tenu entre des plaques latérales (46) et soudé à ces dernières et en ce que, de leur côté, les plaques latérales (46) sont engagées avec liaison par sûreté de forme et fixation par soudage dans des évidements de retenue prévus aussi bien dans le fond tubulaire (8) de la boîte à eau (6) que dans la plaque de fermeture (44).

4. Echangeur de chaleur selon une des revendications 1 à 3, caractérisé en ce que le couvercle (10) de la caisse à eau (6) correspondante est lui aussi composé d'aluminium ou d'un alliage d'aluminium et est soudé au fond tubulaire (8).

5. Echangeur de chaleur selon une des revendications 1 à 3, caractérisé en ce que, dans le cas où les dépressions (60) sont disposées des deux côtés, ces dépressions s'appuient l'une contre l'autre, de préférence par leurs faces frontales ou par les flancs adjacents.

6. Echangeur de chaleur selon une des revendications 1 à 5, caractérisé en ce que les dépressions (60) d'une paroi sont soudées à la paroi opposée, ou de nouveau à des dépressions de paroi, du même tube plat.

7. Echangeur de chaleur selon une des revendications 1 à 6, caractérisé en ce que les dépressions de paroi sont réparties à la façon d'une trame de points.

8. Echangeur de chaleur selon la revendication 7, caractérisé en ce que la trame est orientée pour former un angle différent de 90°, de préférence compris entre 3° et 20°, avec l'axe du tube plat (2) en question.

9. Echangeur de chaleur eau/air selon une des revendications 1 à 8, caractérisé
en ce qu'il est prévu, pour le soudage de la cloison (36) du tube plat (2) en question, une entrée extérieure de fondant qui est fermée par la soudure après le soudage, et
en ce que l'entrée extérieure de fondant est prévue dans la région d'un recouvrement de la pièce de tôle dans la région des jonctions lisses des deux côtés.

10. Echangeur de chaleur selon une des revendications 1 à 9, caractérisé en ce que la pièce de tôle à partir de laquelle le tube plat (2) est formé est préalablement revêtue de soudure sur les deux faces.

11. Echangeur de chaleur selon une des revendications 1 à 9, caractérisé en ce que, dans la région de raccordement (40) de la communication entre les flux à contre-courant, la pièce de tôle est découpée, non pas seulement dans le prolongement de la cloison (36) mais en supplément dans la zone qui y fait suite, de préférence qui y fait suite des deux côtés, le long d'une zone partielle de son recouvrement.

12. Echangeur de chaleur selon la revendication 11, caractérisé en ce que la limite de la découpure s'étend obliquement par rapport aux plans des côtés plats du tube plat (2), de préférence sous un angle β de 30° à 60°.

13. Echangeur de chaleur selon la revendication 11 ou 12, caractérisé en ce que, dans la région de recouvrement, des rainures de guidage (14) prévues pour le fondant sont formées dans la pièce de tôle, le long de la zone de recouvrement.
